# EUROPEAN PATENT SPECIFICATION

(11) **EP 2 233 700 B1**
(45) Date of publication and mention of the grant of the patent: **02.05.2012**
(21) Application number: 09250656.7
(22) Date of filing: 09.03.2009
(51) Int. Cl.: F01D 11/00, F01D 11/02, F02C 7/28, F16J 15/34

(54) **Self balancing face seals and gas turbine engine systems involving such seals**
Selbstausgleichende Gleitringdichtungen und Gasturbinenmotorsysteme mit solchen Dichtungen
Joints auto-équilibrants et systèmes de moteur de turbine à gaz impliquant de tels joints

(43) Date of publication of application: 29.09.2010
(73) Proprietor: United Technologies Corporation, Hartford, CT 06101 (US)
(72) Inventor: Glahn, Jorn A., Manchester, CT 06042 (US); Munsell, Peter M., Granby, CT 06035 (US)
(74) Representative: Tomlinson, Kerry John

(56) References cited:
- EP-A- 0 340 883
- US-A- 3 743 303
- US-A- 5 284 347

## Description

### BACKGROUND

### Technical Field

The disclosure generally relates to gas turbine engines.

### Description of the Related Art

A gas turbine engine typically maintains pressure differentials between various components during operation. These pressure differentials are commonly maintained by various configurations of seals. In this regard, labyrinth seals oftentimes are used in gas turbine engines; EP 0340883 A1 discloses a high pressure seal in a gas turbine engine comprising a low friction carrier coupled to a rotor and sandwiched by forward and aft races.

As is known, labyrinth seals tend to deteriorate over time. By way of example, a labyrinth seal can deteriorate due to rub interactions from thermal and mechanical growths, assembly tolerances, engine loads and maneuver deflections. Unfortunately, such deterioration can cause increased flow consumption resulting in increased parasitic losses and thermodynamic cycle loss.

### SUMMARY

Self-balancing face seals and gas turbine engine systems involving such seals are provided. Thus, viewed from a first aspect, the present invention provides a self-balancing face seal assembly comprising: a rotatable seal runner having a first seal runner face and an opposing second seal runner face; a stator first face seal having a first seal face and being operative to form a first seal with the first seal runner face, the first face seal being one of a hydrostatic seal and a hydrodynamic seal; and a stator second face seal having a second seal face and being operative to form a second seal with the second seal runner face, the second face seal being one of a hydrostatic seal and a hydrodynamic seal, wherein the seal runner is positioned between the first seal face and the second seal face, characterised by: a carrier operative to movably position the first face seal and the second face seal relative to the seal runner, wherein the first seal face and the second seal face are spaced from each other at a defined clearance distance.

Viewed from a second aspect, the present invention provides a turbine assembly for a gas turbine engine comprising: a turbine having a rotatable blades and a self-balancing face seal assembly as described above.

Viewed from a third aspect, the present invention provides a gas turbine engine comprising: a compressor; a shaft interconnected with the compressor; and a turbine operative to drive the shaft, the turbine having a self-balancing face seal assembly as described above.

Other systems, methods, features and/or advantages of this disclosure will be or may become apparent to one with skill in the art upon examination of the following drawings and detailed description. It is intended that all such additional systems, methods, features and/or advantages be included within this description and be within the scope of the present disclosure.

### BRIEF DESCRIPTION OF THE DRAWINGS

Many aspects of the disclosure can be better understood with reference to the following drawings. The components in the drawings are not necessarily to scale. Moreover, in the drawings, like reference numerals designate corresponding parts throughout the several views.
FIG. 1 is a schematic diagram depicting an exemplary embodiment of a self-balancing face seal.
FIG. 2 is a schematic diagram depicting an exemplary embodiment of a gas turbine engine.
FIG. 3 is a schematic diagram depicting a portion of the low-pressure turbine of FIG. 2, showing detail of the embodiment of the self-balancing face seal of FIG. 1 installed therein.
FIG. 4 is a schematic diagram depicting an exemplary embodiment of a self-balancing face seal using hydrostatic balancing forces.
FIG. 5 is a schematic diagram depicting an exemplary embodiment of a self-balancing face seal using hydrodynamic balancing forces.

### DETAILED DESCRIPTION

Self-balancing face seals and gas turbine engine systems involving such seals are provided, several exemplary embodiments of which will be described in detail. In this regard, self-balancing face seals use hydrostatic and/or hydrodynamic forces to position adjustable seal faces adjacent to the opposing sides of a seal runner. In some embodiments, a self-balancing face seal can be used at various locations of a gas turbine engine, for example, such as in association with a low-pressure turbine.

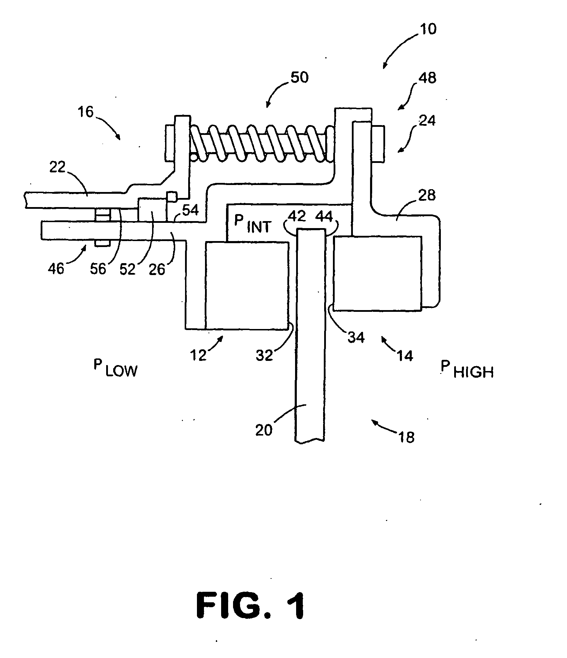

An exemplary embodiment of a self-balancing face seal assembly is depicted schematically in FIG. 1. As shown in FIG. 1, face seal assembly 10 incorporates opposing face seals 12 and 14 that are formed by portions of a stationary stator assembly 16 and a portion of a rotating rotor assembly 18. Specifically, rotor assembly 18 provides a seal runner 20.

Stator assembly 16 includes an arm 22 that facilitates attachment, removal and/or placement of the face seals. A carrier 24 of the stator assembly includes a carrier member 26 (which carries face seal 12) and a carrier member 28 (which carries face seal 14). Carrier 24 accommodates differential thermal growth of the rotor assembly and the stator assembly. Notably, each of the face seals is annular in shape.

Each of the face seals 12, 14 includes a seal face (i.e., a seal-forming surface). Specifically, face seal 12 includes a seal face 32 and face seal 14 includes a seal face 34. Carrier member 26 is axially translatable so that seal face 32 can move, with carrier member 26, away from or toward face 42 of seal runner 20. Similarly, carrier member 28 is axially translatable so that seal face 34 can move, with carrier member 28, away from or toward face 44 of seal runner 20.

In this embodiment, an anti-rotation feature 46 is provided to prevent circumferential displacement of carrier member 26 with respect to the arm 22 and to assist in aligning the carrier member 26 to facilitate axial translation. An anti-rotation feature 48 is provided to prevent circumferential displacement of carrier member 28 with respect to carrier member 26.

A biasing member 50, which is provided as a spring in this embodiment, biases the carrier members 26, 28 together to establish a defined clearance between the seal faces 32, 34. In this regard, the defined clearance can be selected to maintain a desired pressure differential between a high-pressure side (P_{HIGH}) and a low-pressure side (P_{LOW}) of the seal assembly. Notably, multiple biasing members may be spaced about the carrier. Additionally, a secondary seal 52 (e.g., a piston ring) is captured between opposing surfaces 54, 56 of the arm 22 and carrier member 26, respectively, to control gas leakage between the arm and the carrier.

In operation, interaction between seal face 32 and seal runner face 42 results in pneumatic forces urging seal face 32 away from seal runner face 42. Simultaneously, however, interaction between seal face 34 and seal runner face 44 results in other pneumatic forces urging seal face 34 away from seal runner face 44. These competing pneumatic forces, when balanced, tend to cause centering of the seal runner between the opposing seal faces 42, 44, thereby establishing the desired sealing between the low-pressure side (P_{LOW}) and the high-pressure side (P_{HIGH}) of the seal assembly 10.

Notably, either or both of face seals 12 and 14 can be hydrostatic seals or hydrodynamic seals. In this regard, a hydrostatic seal is a seal that uses balanced static pressure forces as opening and closing forces to maintain a desired separation between a seal face and a corresponding seal runner. A hydrodynamic seal is a seal that uses balanced dynamic pressure forces as opening and closing forces to maintain a desired separation between a seal face and a corresponding seal runner. In a hydrodynamic seal, one or both of the seal face and corresponding seal runner can include surface features for generating the dynamic pressure forces when the seal runner rotates relative to the seal face. Typically, both face seals of a particular seal assembly are of the same type.

During normal operating conditions, the seal faces 32, 34 and the seal runner faces 42, 44 should not contact each other. In this regard, a material containing carbon can be used as a seal face material. It should be noted, however, that carbon can fracture or otherwise be damaged due to unintended contact (e.g., excessively forceful contact) between the seal face and the seal runner as may be caused by severe pressure fluctuations and/or vibrations, for example. It should also be noted that carbon may be susceptible to deterioration at higher temperatures. Therefore, carbon should be used in locations where predicted temperatures are not excessive such as in the low-pressure turbine. By way of example, use of such a material may not be appropriate, in some embodiments, in a high-pressure turbine.

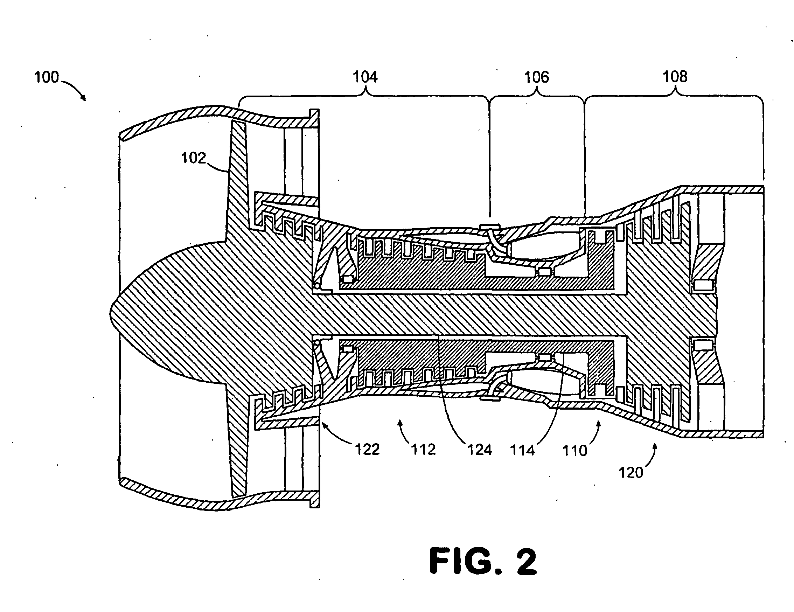

FIG. 2 is a schematic diagram depicting an exemplary embodiment of a gas turbine engine that incorporates at least one self-balancing face seal. As shown in FIG. 2, engine 100 is configured as a turbofan gas turbine engine that incorporates a fan 102, a compressor section 104, a combustion section 106 and a turbine section 108. Although the embodiment of FIG. 2 is configured as a turbofan, there is no intention to limit the concepts described herein to use with turbofans. That is, self-balancing face seals can be used in various other configurations of gas turbine engines, as well as in other systems in which maintaining a pressure differential between rotating and nonrotating components is desired.

In the embodiment of FIG. 2, engine 100 is a dual spool engine that includes a high-pressure turbine 110 interconnected with a high-pressure compressor 112 via a shaft 114, and a low-pressure turbine 120 interconnected with a low-pressure compressor 122 via a shaft 124.

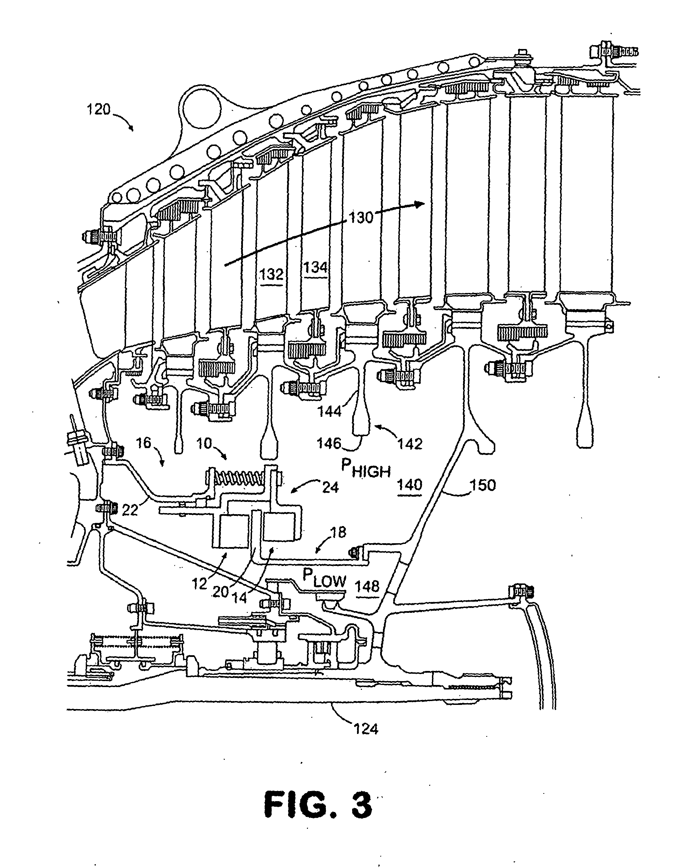

As shown in FIG. 3, low-pressure turbine 120 defines a primary gas flow path 130 along which multiple rotating blades (e.g., blade 132) and stationary vanes (e.g., vane 134) are located. In this embodiment, the blades are mounted to turbine disks, the respective webs and bores of which extend into a high-pressure cavity 140. For instance, disk 142 includes a web 144 and a bore 146, each of which extends into cavity 140.

A relatively lower-pressure cavity 148 is oriented between high-pressure cavity 140 and turbine hub 150, with a self-balancing face seal assembly 10 (described in detail before with respect to FIG. 1) being provided to maintain a pressure differential between the high-pressure cavity and the lower-pressure cavity. It should also be noted that although this embodiment is described as incorporating a self-balancing face seal in association with a low-pressure turbine, such seals are not limited to use with low-pressure turbines when used in gas turbine engines.

In the implementation of FIG. 3, the rotor assembly 18 (which includes the seal runner 20) is provided by a removable bracket that is mounted to the low-pressure turbine hub 150. The stator assembly 16 (which provides arm 22 and carrier 24) is provided by a removable bracket that is mounted to a stationary portion of the engine. By providing seal assembly 10 as a removable assembly, the location of which can be adjusted axially and/or radially, thrust balance trimming of engine 100 can be at least partially accommodated by altering the position of the seal assembly to adjust the volume of cavities 140 and 148.

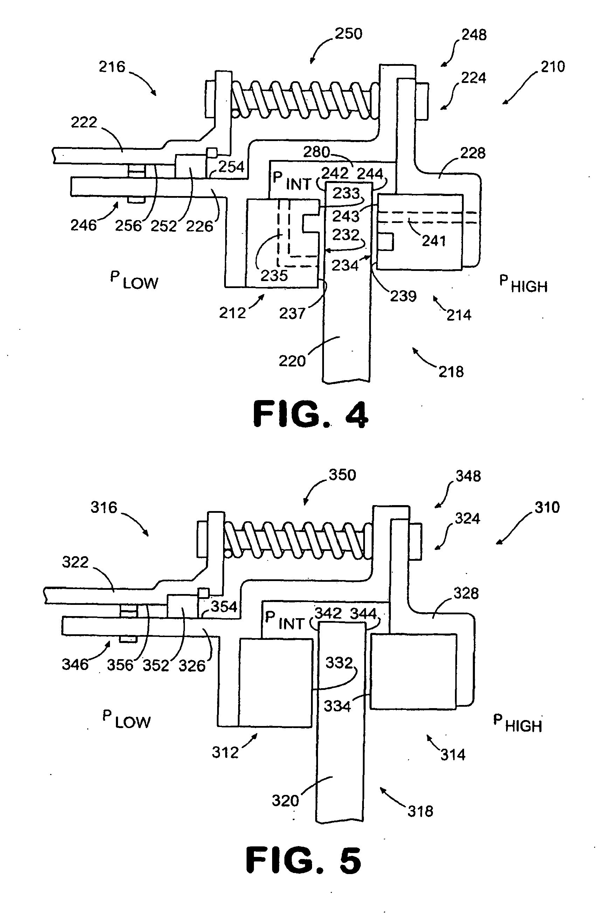

Another exemplary embodiment of a self-balancing face seal assembly is depicted schematically in FIG. 4. As shown in FIG. 4, face seal assembly 210 incorporates opposing hydrostatic face seals 212 and 214 that are formed by portions of a stationary stator assembly 216 and a portion of a rotating rotor assembly 218. Specifically, rotor assembly 218 provides a seal runner 220.

Stator assembly 216 includes an arm 222 that facilitates attachment, removal and/or placement of the face seals. A carrier 224 of the stator assembly includes a carrier member 226 (which carries face seal 212) and a carrier member 228 (which carries face seal 214).

Hydrostatic face seal 214 includes a seal face 234, a seal dam 239, and an air bearing 243 that is fed via air passage 241 with air from the high-pressure side (P_{HIGH}) of the seal assembly 210. Air bearing air and leakage air passing air dam 239 will be discharged into a plenum 280 formed between hydrostatic face seal 214, hydrostatic face seal 212, rotor assembly 218, and carrier 224. Air pressure in plenum 280 will be at an intermediate pressure (P_{INT}) that is smaller than the high pressure side (P_{HIGH}) but larger than the low pressure side (P_{LOW}) of assembly 210. Hydrostatic face seal 212 includes a seal face 232, which incorporates a seal dam 233, and air bearing 237 that is fed via air passage 235 with air from the intermediate-pressure plenum 280. Air bearing air and leakage air passing air dam 233 will be discharged to the low pressure side (P_{LOW}) of assembly 210.

In operation, interaction between seal face 232 and seal runner face 242 results in hydrostatic forces urging seal face 232 away from seal runner face 242. Simultaneously, however, interaction between seal face 234 and seal runner face 244 results in other hydrostatic forces urging seal face 234 away from seal runner face 244. These competing hydrostatic forces can be balances by compensating the decrease in air bearing supply pressure from P_{HIGH} at hydrostatic face seal 214 to P_{INT} at hydrostatic face seal 212 with a corresponding increase in air bearing size from air bearing 243 to air bearing 237. Hydrostatic forces, when balanced, tend to cause centering of the seal runner between the opposing seal faces 242, 244, thereby establishing the desired sealing between the low-pressure side (P_{LOW}) and the high-pressure side (P_{HIGH}) of the seal assembly 210.

Carrier member 226 is axially translatable so that seal face 232 can move, with carrier member 226, away from or toward face 242 of seal runner 220. Similarly, carrier member 228 is axially translatable so that seal face 234 can move, with carrier member 228, away from or toward face 244 of seal runner 220.

An anti-rotation feature 246 is provided to prevent circumferential displacement of carrier member 226 with respect to the arm 222 and to assist in aligning the carrier member 226 to facilitate axial translation. An anti-rotation feature 248 is provided to prevent circumferential displacement of carrier member 228 with respect to carrier member 226.

A biasing member 250, biases the carrier members 226, 228 together to establish a defined clearance between the seal faces 232, 234. Additionally, a piston ring 252 is captured between opposing surfaces 254, 256 of the arm 222 and carrier member 226, respectively, to control gas leakage between the arm and the carrier.

Another exemplary embodiment of a self-balancing face seal assembly is depicted schematically in FIG. 5. As shown in FIG. 5, face seal assembly 310 incorporates opposing hydrodynamic face seals 312 and 314 that are formed by portions of a stationary stator assembly 316 and a portion of a rotating rotor assembly 318. Specifically, rotor assembly 318 provides a seal runner 320.

Stator assembly 316 includes an arm 322 that facilitates attachment, removal and/or placement of the face seals. A carrier 324 of the stator assembly includes a carrier member 326 (which carries face seal 312) and a carrier member 328 (which carries face seal 314).

Hydrodynamic face seal 312 includes a seal face 332, and hydrodynamic face seal 314 includes a seal face 334. Carrier member 226 is axially translatable so that seal face 332 can move, with carrier member 326, away from or toward face 342 of seal runner 320. Similarly, carrier member 328 is axially translatable so that seal face 334 can move, with carrier member 328, away from or toward face 344 of seal runner 320. Notably, one or both of seal face 332 and seal runner face 342 can include surface features for generating hydrodynamic forces when the seal runner rotates relative to the seal face. Additionally, one or both of seal face 334 and seal runner face 344 can include surface features for generating hydrodynamic forces.

An anti-rotation feature 346 is provided to prevent circumferential displacement of carrier member 326 with respect to the arm 322 and to assist in aligning the carrier member 326 to facilitate axial translation. An anti-rotation feature 348 is provided to prevent circumferential displacement of carrier member 328 with respect to carrier member 326.

A biasing member 350, biases the carrier members 326, 328 to establish a defined clearance between the seal faces 332, 334. Additionally, a secondary seal 352 is positioned between opposing surfaces 354, 356 of the arm 322 and carrier member 326, respectively, to control gas leakage between the arm and the carrier.

In operation, interaction between seal face 332 and seal runner face 342 results in hydrodynamic forces urging seal face 332 away from seal runner face 342. Simultaneously, however, interaction between seal face 334 and seal runner face 344 results in other hydrodynamic forces urging seal face 334 away from seal runner face 344. These competing forces, when balanced, tend to cause centering of the seal runner between the opposing seal faces 342, 344, thereby establishing the desired sealing between the low-pressure side (P_{LOW}) and the high-pressure side (P_{HIGH}) of the seal assembly 310.

Notably, It should be emphasized that the above-described embodiments are merely possible examples of implementations set forth for a clear understanding of the principles of this disclosure. Many variations and modifications may be made to the above-described embodiments without departing substantially from the principles of the disclosure.

## Claims

1. A self-balancing face seal assembly (10) comprising:
a rotatable seal runner (20) having a first seal runner face (42) and an opposing second seal runner face (44);
a stator first face seal (12) having a first seal face (32) and being operative to form a first seal with the first seal runner face, the first face seal being one of a hydrostatic seal and a hydrodynamic seal; and
a stator second face seal (14) having a second seal face (34) and being operative to form a second seal with the second seal runner face, the second face seal being one of a hydrostatic seal and a hydrodynamic seal,
wherein the seal runner (20) is positioned between the first seal face and the second seal face,
**characterised by**:
a carrier (24) operative to movably position the first face seal and the second face seal relative to the seal runner,
wherein the first seal face and the second seal face are spaced from each other at a defined clearance distance.

2. The assembly of claim 1, wherein:
the first face seal (12) is annular; and
the second face seal (14) is annular.

3. The assembly of claim 1 or 2, wherein, in operation, pneumatic forces urging the first face seal (12) away from the first seal runner face (42) tend to urge the second face seal (14) toward the second seal runner face (44) and pneumatic forces urging the second face seal (14) away from the second seal runner face (44) tend to urge the first face seal (12) toward the first seal runner face (42).

4. The assembly of claim 1, 2 or 3, further comprising a biasing member (50) operative to bias a position of the carrier.

5. The assembly of any preceding claim, further comprising:
an arm (22), the carrier (24) being attached to and movable relative to the arm; and
a secondary seal (52) operative to reduce gas leakage between the arm and the carrier.

6. The assembly of any preceding claim, wherein the first face seal is a hydrostatic seal and the second face seal is a hydrostatic seal.

7. The assembly of any of claims 1 to 5, wherein the first face seal is a hydrodynamic seal and the second face seal is a hydrodynamic seal.

8. The assembly of any preceding claim, wherein at least one of the first seal face and the second seal face is formed of a material comprising carbon.

9. The assembly of any preceding claim, wherein:
the assembly further comprises a stator assembly and a rotor assembly;
each of the stator assembly and the rotor assembly being removable and having a corresponding mounting bracket;
the stator assembly incorporating the first face seal and the second face seal;
the rotor assembly incorporating the seal runner.

10. A turbine assembly for a gas turbine engine comprising:
a turbine (110,120) having a rotatable blades (132) and a self-balancing face seal assembly (10) as claimed in any preceding claim.

11. The assembly of claim 10, wherein the seal runner (20) is operative to rotate with the blades (132).

12. The assembly of claim 10 or 11, wherein the turbine is a low-pressure turbine (120).

13. A gas turbine engine (100) comprising:
a compressor (112,122);
a shaft (114) interconnected with the compressor; and
a turbine (110,120) operative to drive the shaft, the turbine having a self-balancing face seal assembly (10) as claimed in any of claims 1 to 9.

14. The engine of claim 13, wherein the gas turbine engine is a turbofan.

## Patentansprüche

1. Selbst ausgleichende Flächendichtungsanordnung (10) umfassend:
einen rotierbaren Dichtungsläufer (20), der eine erste Dichtungsläuferfläche (42) und eine gegenüberliegende zweite Dichtungsläuferfläche (44) aufweist;
eine erste Statorflächendichtung (12), die eine erste Dichtungsfläche (32) aufweist und in der Lage ist, eine erste Dichtung mit der ersten Dichtungsläuferfläche zu bilden, wobei die erste Flächendichtung eine aus einer hydrostatischen Dichtung und einer hydrodynamischen Dichtung ist; und
eine zweite Statorflächendichtung (14), die eine zweite Dichtungsfläche (34) aufweist und in der Lage ist, eine zweite Dichtung mit der zweiten Dichtungsläuferfläche zu bilden, wobei die zweite Flächendichtung eine aus einer hydrostatischen Dichtung und einer hydrodynamischen Dichtung ist,
wobei der Dichtungsläufer (20) zwischen der ersten Dichtungsfläche und der zweiten Dichtungsfläche angeordnet ist,
**gekennzeichnet durch**:
einen Träger (24), der in der Lage ist, die erste Flächendichtung und die zweite Flächendichtung relativ zu dem Dichtungsläufer beweglich zu positionieren,
wobei die erste Dichtungsfläche und die zweite Dichtungsfläche in einem definierten Lichtabstand zueinander beabstandet sind.

2. Anordnung nach Anspruch 1, wobei:
die erste Flächendichtung (12) ringförmig ist; und
die zweite Flächendichtung (14) ringförmig ist.

3. Anordnung nach Anspruch 1 oder 2, wobei im Betrieb pneumatische Kräfte, welche die erste Flächendichtung (12) weg von der ersten Dichtungsläuferfläche (42) drängen, dazu tendieren, die zweite Flächendichtung (14) hin zu der zweiten Dichtungsläuferfläche (44) zu drängen, und pneumatische Kräfte, welche die zweite Flächendichtung (14) weg von der zweiten Dichtungsläuferfläche (44) drängen, dazu tendieren, die erste Flächendichtung (12) hin zu der ersten Dichtungsläuferfläche (42) zu drängen.

4. Anordnung nach Anspruch 1, 2 oder 3, des Weiteren umfassend ein Beaufschlagungselement (50), das in der Lage ist, eine Position des Trägers zu beaufschlagen.

5. Anordnung nach einem der vorangehenden Ansprüche, des Weiteren umfassend:
einen Arm (22), wobei der Träger (24) an den Arm angebracht und relativ zu dem Arm bewegbar ist; und
eine zweite Dichtung (52), die in der Lage ist, Gasleckage zwischen dem Arm und dem Träger zu reduzieren.

6. Anordnung nach einem der vorangehenden Ansprüche, wobei die erste Flächendichtung eine hydrostatische Dichtung ist und die zweite Flächendichtung eine hydrostatische Dichtung ist.

7. Anordnung nach einem der Ansprüche 1 bis 5, wobei die erste Flächendichtung eine hydrodynamische Dichtung ist und die zweite Flächendichtung eine hydrodynamische Dichtung ist.

8. Anordnung nach einem der vorangehenden Ansprüche, wobei zumindest eine der ersten Dichtungsfläche und der zweiten Dichtungsfläche aus einem Material, das Karbon umfasst, ausgebildet ist.

9. Anordnung nach einem der vorangehenden Ansprüche, wobei:
die Anordnung des Weiteren eine Statoranordnung und eine Rotoranordnung umfasst;
wobei sowohl die Statoranordnung als auch die Rotoranordnung entfernbar sind und einen zugehörigen Anbringungshalter aufweisen;
wobei die Statoranordnung die erste Flächendichtung und die zweite Flächendichtung umfasst;
wobei die Rotoranordnung den Dichtungsläufer umfasst.

10. Turbinenanordnung für eine Gasturbinenmaschine umfassend:
eine Turbine (110, 120), die rotierbare Schaufeln (132) und eine selbst ausgleichende Flächendichtungsanordnung (10) nach einem der vorangehenden Ansprüche aufweist.

11. Anordnung nach Anspruch 10, wobei der Dichtungsläufer (20) dazu in der Lage ist, mit den Schaufeln (132) zu rotieren.

12. Anordnung nach Anspruch 10 oder 11, wobei die Turbine eine Niederdruckturbine (120) ist.

13. Gasturbinenmaschine (110) umfassend:
einen Kompressor (112, 122);
eine Welle (114), die mit dem Kompressor verbunden ist; und
eine Turbine (110, 120), die in der Lage ist, die Welle anzutreiben, wobei die Turbine eine selbst ausgleichende Flächendichtungsanordnung (10) nach einem der Ansprüche 1 bis 9 aufweist.

14. Maschine nach Anspruch 13, wobei die Gasturbinenmaschine ein Turbobläser ist.

## Revendications

1. Ensemble de joint facial auto-équilibré (10) comprenant :
une roue de joint mobile (20) ayant une première face de roue de joint (42) et une seconde face de roue de joint opposée (44) ;
un premier joint facial de stator (12) ayant une première face de joint (32) et étant opérationnel pour former un premier joint avec la première face de roue de joint, le premier joint facial étant l'un d'un joint hydrostatique et d'un joint hydrodynamique ; et
un second joint facial de stator (14) ayant une seconde face de joint (34) et étant opérationnel pour former un second joint avec la seconde face de roue de joint, le second joint facial étant l'un d'un joint hydrostatique et d'un joint hydrodynamique,
dans lequel la roue de joint (20) est positionnée entre la première face de joint et la seconde face de joint,
**caractérisé par** :
un support (24) opérationnel pour positionner de façon mobile le premier joint facial et le second joint facial par rapport à la roue de joint,
dans lequel la première face de joint et la seconde face de joint sont espacées l'une de l'autre selon une distance de dégagement définie.

2. Ensemble selon la revendication 1; dans lequel :
le premier joint facial (12) est annulaire ; et
le second joint facial (14) est annulaire.

3. Ensemble selon la revendication 1 ou 2, dans lequel, en fonctionnement, des forces pneumatiques poussant le premier joint facial (12) en éloignement de la première face de roue de joint (42) ont tendance à pousser le second joint facial (14) vers la seconde face de roue de joint (44) et des forces pneumatiques poussant le second joint facial (14) en éloignement de la seconde face de roue de joint (44) ont tendance à pousser le premier joint facial (12) vers la première face de roue de joint (42).

4. Ensemble selon la revendication 1, 2 ou 3, comprenant en outre un organe de sollicitation (50) opérationnel pour solliciter une position du support.

5. Ensemble selon l'une quelconque des revendications précédentes, comprenant en outre :
un bras (22), le support (24) étant attaché et étant mobile par rapport au bras ; et
un joint secondaire (52) opérationnel pour réduire la fuite de gaz entre le bras et le support.

6. Ensemble selon l'une quelconque des revendications précédentes, dans lequel le premier joint facial est un joint hydrostatique et le second joint facial est un joint hydrostatique.

7. Ensemble selon l'une quelconque des revendications 1 à 5, dans lequel le premier joint facial est un joint hydrodynamique et le second joint facial est un joint hydrodynamique.

8. Ensemble selon l'une quelconque des revendications précédentes, dans lequel au moins une de la première face de joint et de la seconde face de joint est formée d'un matériau comprenant du carbone.

9. Ensemble selon quelconque des revendications précédentes, dans lequel :
l'ensemble comprend en outre un ensemble de stator et un ensemble de rotor ;
chacun de l'ensemble de stator et de l'ensemble de rotor étant amovible et ayant une console de montage correspondante ;
l'ensemble de stator incorporant le premier joint facial et le second joint facial ;
l'ensemble de rotor incorporant la roue de joint.

10. Ensemble de turbine pour un moteur à turbine à gaz comprenant :
une turbine (110, 120) ayant des aubes (132) pouvant être mises en rotation et un ensemble de joint facial auto-équilibré (10) selon l'une quelconque des revendications précédentes.

11. Ensemble selon la revendication 10, dans lequel la roue de joint (20) est opérationnelle pour être mise en rotation avec les aubes (132).

12. Ensemble selon la revendication 10 ou 11, dans lequel la turbine est une turbine basse pression (120).

13. Moteur à turbine à gaz (100) comprenant :
un compresseur (112, 122) ;
un arbre (114) interconnecté avec le compresseur ; et
une turbine (110, 120) opérationnelle pour entraîner l'arbre, la turbine ayant un ensemble de joint facial auto-équilibré (10) selon l'une quelconque des revendications 1 à 9.

14. Moteur selon la revendication 13, dans lequel le moteur à turbine à gaz est un moteur à double flux.
